# EUROPÄISCHE PATENTSCHRIFT

(11) **EP 4 532 298 B1**
(45) Veröffentlichungstag und Bekanntmachung des Hinweises auf die Patenterteilung: **28.10.2026**
(21) Anmeldenummer: 23720629.7
(22) Anmeldetag: 26.04.2023
(51) Int. Cl.: B62D 21/15, B62D 25/02, B62D 25/08, B62D 29/00

(54) **KAROSSERIESTRUKTUR FÜR EINE KAROSSERIE EINES PERSONENKRAFTWAGENS, KAROSSERIE SOWIE PERSONENKRAFTWAGEN**
BODY STRUCTURE FOR A BODY OF A PASSENGER VEHICLE, BODY AND PASSENGER VEHICLE
STRUCTURE DE CARROSSERIE POUR UNE CARROSSERIE DE VÉHICULE PARTICULIÈRE, CARROSSERIE AINSI QUE VÉHICULE PARTICULIÈRE

(30) Priorität: 24.05.2022 DE 102022113070
(43) Veröffentlichungstag der Anmeldung: 09.04.2025
(73) Patentinhaber: Bayerische Motoren Werke Aktiengesellschaft, 80809 München (DE)
(72) Erfinder: HASLAUER, Christian, 82319 Starnberg (DE); PARISI, Marco, 80799 München (DE); LESCHHORN, Juergen, 82269 Geltendorf (DE)
(86) Internationale Anmeldenummer: PCT/EP2023/060873
(87) Internationale Veröffentlichungsnummer: WO 2023/227315

(56) Entgegenhaltungen:
- EP-B2- 2 569 211
- DE-A1- 102011 012 118
- DE-B4- 102020 111 260

## Beschreibung

Die Erfindung betrifft eine Karosseriestruktur für eine, insbesondere selbsttragende, Karosserie eines Personenkraftwagens. Des Weiteren betrifft die Erfindung eine, insbesondere selbsttragende, Karosserie für einen Personenkraftwagen. Die Erfindung betrifft auch einen Personenkraftwagen mit einer solchen Karosserie.

Der EP 2 483 136 B1 ist ein Fahrzeugkarosserieaufbau als bekannt zu entnehmen, mit einer Karosserieversteifung hinter einer zweiten Sitzreihe, wobei die Karosserieversteifung aus einem Trägerverbund besteht. Des Weiteren offenbart die DE 10 2010 008 615 B4 einen Strukturknoten für eine Karosserie eines Fahrzeugs. Darüber hinaus ist aus der DE 10 2010 021 142 A1 ein Querträger für eine Heckstruktur eines Personenkraftwagens bekannt. Des Weiteren offenbart die WO 2022/031991 A1 ein integriertes Energieabsorptionssystem für ein Fahrzeug. Die EP 2 569 211 B2 offenbart eine Karosseriestruktur gemäß dem Oberbegriff des Anspruchs 1.

Die DE 10 2020 111 260 B4 offenbart eine Fahrzeugkörperunterteilstruktur. Die DE 102011 012 118 A1 offenbart einen Hilfsrahmen für eine Karosserie eines Kraftwagens.

Aufgabe der vorliegenden Erfindung ist es, eine Karosseriestruktur für eine Karosserie eines Personenkraftwagens, eine Karosserie für einen Personenkraftwagen sowie einen Personenkraftwagen zu schaffen, sodass ein besonders vorteilhaftes Unfallverhalten realisiert werden kann.

Diese Aufgabe wird erfindungsgemäß durch eine Karosseriestruktur mit den Merkmalen des Patentanspruchs 1, durch eine Karosserie mit den Merkmalen des Patentanspruchs 14 sowie durch einen Personenkraftwagen mit den Merkmalen des Patentanspruchs 15 gelöst. Vorteilhafte Ausgestaltungen der Erfindung sind Gegenstand der abhängigen Ansprüche.

Ein erster Aspekt der Erfindung betrifft eine Karosseriestruktur für eine, insbesondere selbsttragende, Karosserie eines auch als Fahrzeug bezeichneten Personenkraftwagens. Dies bedeutet, dass der Personenkraftwagen in seinem vollständig hergestellten Zustand die Karosserie aufweist, welche einen auch als Fahrgastzelle oder Fahrgastraum bezeichneten Innenraum des Personenkraftwagens bildet oder begrenzt. Dabei können sich Personen wie beispielsweise ein Fahrer des einfach auch als Kraftwagen oder Kraftfahrzeug bezeichneten Personenkraftwagens während einer Fahrt des Personenkraftwagens in dem Innenraum aufhalten. Die Karosserie umfasst in ihrem vollständig hergestellten Zustand die Karosseriestruktur, welche somit ein fester, nicht zerstörungsfrei lösbarer Bestandteil der Karosserie ist. Insbesondere ist die Karosseriestruktur ein, insbesondere hinterer, Unterbau, welcher in Fahrzeughochrichtung des Personenkraftwagens weiter unten beziehungsweise unterhalb als der Innenraum angeordnet ist. Die Fahrzeughochrichtung wird auch mit z oder als z-Richtung bezeichnet.

Die Karosseriestruktur weist zwei in Fahrzeugquerrichtung des Personenkraftwagens voneinander beabstandete Längsträger auf, wobei die Fahrzeugquerrichtung senkrecht zur Fahrzeughochrichtung verläuft und auch mit y oder als y-Richtung bezeichnet wird. Die Längsträger, deren jeweilige Längserstreckungsrichtungen zumindest im Wesentlichen parallel zur Fahrzeuglängsrichtung des Personenkraftwagens verlaufen und in Fahrzeugquerrichtung voneinander beabstandet sind, sind als Leichtmetall-Gussteile ausgebildet. Die Fahrzeuglängsrichtung verläuft dabei senkrecht zur Fahrzeughochrichtung und senkrecht zur Fahrzeugquerrichtung und wird auch mit x oder als x-Richtung bezeichnet. Unter dem Merkmal, dass die Längsträger als Leichtmetall-Gussteile, welche auch als Leichtmetall-Gussbauteile bezeichnet werden, ausgebildet sind, ist zu verstehen, dass der jeweilige Längsträger als ein jeweiliges Gussteil und aus einem jeweiligen Leichtmetall, das heißt aus einer jeweiligen Leichtmetalllegierung, gebildet, das heißt hergestellt ist. Wieder mit anderen Worten ausgedrückt ist der jeweilige Längsträger aus einem Leichtmetall, das heißt aus einer Leichtmetalllegierung und durch Gießen, das heißt durch ein Gießverfahren, hergestellt.

Die Karosseriestruktur weist außerdem wenigstens einen Querträger auf, über welchen, wie im Folgenden noch genauer erläutert wird, die Längsträger miteinander verbunden sind, insbesondere dadurch, dass der Querträger zumindest mittelbar an die Längsträger angebunden ist. Der Querträger ist aus einem ersten Stahl gebildet, welcher auch als erster Stahlwerkstoff bezeichnet wird und ein von dem Leichtmetall beziehungsweise von der Leichtmetalllegierung, aus welchem beziehungsweise aus welcher die Längsträger gebildet sind, unterschiedlicher, erster Werkstoff ist. Der Querträger weist eine Längserstreckungsrichtung auf, welche zumindest im Wesentlichen parallel zur Fahrzeugquerrichtung und somit senkrecht zur jeweiligen Längserstreckungsrichtung des jeweiligen Längsträgers verläuft. Insbesondere ist es vorgesehen, dass die Längsträger und der Querträger insbesondere in Fahrzeughochrichtung betrachtet auf gleicher Höhe beziehungsweise in einer gemeinsamen Ebene angeordnet sind, welche insbesondere senkrecht zur Fahrzeughochrichtung verläuft und dabei insbesondere durch die Fahrzeuglängsrichtung und die Fahrzeugquerrichtung aufgespannt wird.

Die Karosseriestruktur weist außerdem eine Stahlstruktur auf, welche grundsätzlich einstückig ausgebildet, das heißt durch ein einziges Stück gebildet sein könnte. Ferner ist es jedoch denkbar, dass die Stahlstruktur mehrteilig ausgebildet ist und somit beispielsweise mehrere, das heißt wenigstens zwei separat voneinander ausgebildete und zumindest mittelbar miteinander verbundene Teile aufweist. Die Stahlstruktur ist aus einem zweiten Stahl gebildet, das heißt hergestellt, wobei der zweite Stahl auch als zweiter Stahlwerkstoff bezeichnet wird. Der erste Stahl und der zweite Stahl sind voneinander unterschiedliche Stähle, das heißt voneinander unterschiedliche Stahlwerkstoffe. Mit anderen Worten ist der zweite Stahl ein von dem ersten Stahl und von dem Leichtmetall beziehungsweise von der Leichtmetalllegierung, aus welchem beziehungsweise welcher die Längsträger gebildet, das heißt hergestellt, sind, unterschiedlicher, zweiter Werkstoff. Somit ist es insbesondere denkbar, dass die vorgenannten Teile der Stahlstruktur aus dem zweiten Stahl, mithin aus dem zweiten Stahlwerkstoff, gebildet sind. Insbesondere ist im Rahmen der vorliegenden Offenbarung unter einem Stahl und somit unter dem ersten Stahl und dem zweiten Stahl eine Eisen-Kohlenstoff-Legierung mit einem Kohlenstoff-Massenanteil von maximal 2 Prozent, insbesondere von weniger als 2 Prozent, zu verstehen.

Bei der Karosseriestruktur ist die Stahlstruktur mit den jeweiligen Längsträgern und mit dem Querträger verbunden, wodurch der jeweilige Längsträger über die Stahlstruktur mit dem Querträger verbunden ist. Hierdurch sind insbesondere die Längsträger über die Stahlstruktur und über den Querträger miteinander verbunden. Insbesondere ist es vorgesehen, dass die Stahlstruktur an wenigstens einer ersten Verbindungsstelle, insbesondere mittels eines ersten Verbindungselements und/oder durch eine erste Fügeoperation, mit einem ersten der Längsträger und an wenigstens einer zweiten Fügestelle, insbesondere mittels wenigstens eines zweiten Fügeelements und/oder durch eine zweite Fügeoperation, mit dem zweiten Längsträger verbunden ist, wobei die zweite Fügestelle von der ersten Fügestelle beabstandet und zusätzlich zu der ersten Fügestelle vorgesehen ist. Außerdem ist beispielsweise die Stahlstruktur an wenigstens einer dritten Fügestelle, insbesondere mittels wenigstens eines dritten Fügeelements und/oder eine dritte Fügeoperation, mit dem Querträger verbunden, das heißt gefügt, wobei die dritte Fügestelle von der ersten Fügestelle und von der zweiten Fügestelle beabstandet und zusätzlich zu der ersten Fügestelle und zusätzlich zu der zweiten Fügestelle vorgesehen ist. Ferner ist es beispielsweise vorgesehen, dass die Stahlstruktur an wenigstens einer vierten Fügestelle, insbesondere mittels wenigstens eines vierten Fügeelements und/oder durch eine vierte Fügeoperation, mit dem Querträger verbunden, das heißt gefügt, ist, wobei die vierte Fügestelle von der ersten Fügestelle, von der zweiten Fügestelle und von der dritten Fügestelle beabstandet und zusätzlich zu der ersten Fügestelle, zusätzlich zu der zweiten Fügestelle und zusätzlich zu der dritten Fügestelle vorgesehen ist. Dadurch, dass die Längsträger mit der Stahlstruktur und die Stahlstruktur mit dem Querträger verbunden sind, sind die Längsträger unter Vermittlung der Stahlstruktur mit dem Querträger verbunden, das heißt an dem Querträger angebunden, wodurch eine besonders vorteilhafte Anbindung der Längsträger an den Querträger beziehungsweise umgekehrt dargestellt werden kann, insbesondere trotz Verwendung des Leichtmetalls beziehungsweise der Leichtmetalllegierung, aus welchem die Längsträger hergestellt sind, und des ersten Stahls, aus welchem der Querträger gebildet, das heißt hergestellt, ist. Gleichzeitig kann durch Verwendung des Leichtmetalls beziehungsweise der Leichtmetalllegierung und des ersten Stahls ein besonders vorteilhaftes Unfallverhalten der Karosseriestruktur und somit der Karosserie und des Personenkraftwagens insgesamt realisiert werden, insbesondere dadurch, dass bei einer beispielsweise aus einem Seitenaufprall resultierenden und somit beispielsweise in Fahrzeugquerrichtung von außen nach innen auf die Karosseriestruktur wirkenden, unfallbedingten Kraftbeaufschlagung ein besonders vorteilhaftes Umformverhalten und/oder Energieabsorptionsvermögen der Karosseriestruktur dargestellt werden kann. Insbesondere kann durch Verwendung des ersten Stahls ein Verformungs- und/oder Versagensverhalten der Karosseriestruktur im Falle einer unfallbedingten Kraftbeaufschlagung gezielt eingestellt werden, insbesondere dahingehend, dass ein aus einer unfallbedingten Kraftbeaufschlagung resultierendes, willkürliches beziehungsweise unvorhersehbares Versagen der Karosseriestruktur, das heißt ein aus einer unfallbedingten Kraftbeaufschlagung resultierendes Versagen der Karosseriestruktur, an einer nicht vorhersagbaren Stelle vermieden und die Wahrscheinlichkeit hierfür besonders gering gehalten werden kann.

Der Erfindung liegen insbesondere die folgenden Erkenntnisse und Überlegungen zugrunde: Um ein vorteilhaftes Unfallverhalten und dabei beispielsweise insbesondere einen vorteilhaften Seitenaufprall-Schutz realisieren zu können, sind stabile Lastpfade insbesondere in Fahrzeuglängsrichtung und Fahrzeugquerrichtung vorteilhaft, wobei über die Lastpfade bei einer unfallbedingten Kraftbeaufschlagung der Karosseriestruktur unfallbedingte Kräfte beziehungsweise Lasten vorteilhaft geführt und beispielsweise um wenigstens einen Bereich herumlenkt und somit von dem Bereich ferngehalten werden kann. Somit kann beispielsweise in dem Bereich ein Bauelement positioniert werden, welches im Falle eines Unfalls vor übermäßigen, unfallbedingten Lasten mittels der Karosseriestruktur geschützt werden kann. Bei dem Bauelement handelt es sich beispielsweise um einen elektrischen Energiespeicher, insbesondere dann, wenn der Personenkraftwagen als ein Elektrofahrzeug, insbesondere als ein batterieelektrisches Fahrzeug, ausgebildet ist. In vollständig hergestelltem Zustand des Personenkraftwagens ist der elektrische Energiespeicher beispielsweise an die Längs- und/oder Querstrukturen der Karosserie, insbesondere der Karosseriestruktur, angebunden und kann beispielsweise mittels der Karosseriestruktur vorteilhaft vor übermäßigen, unfallbedingten Belastungen geschützt werden, insbesondere dadurch, dass beispielsweise der Energiespeicher in an der Karosserie angeordnetem und somit befestigtem Zustand und somit in vollständig hergestelltem Zustand des Personenkraftwagens in Fahrzeuglängsrichtung nach vorne hin zumindest teilweise durch den Querträger und/oder in Fahrzeugquerrichtung nach außen hin beidseitig jeweils zumindest teilweise durch die jeweiligen Längsträger der Karosseriestruktur überlappt und somit überdeckt ist. Grundsätzlich ist es wünschenswert, aus Leichtbau-Gründen die beispielsweise in vollständig hergestelltem Zustand des Personenkraftwagens hinteren Längsträger aus der genannten Leichtmetalllegierung herzustellen, um das Gewicht der Karosseriestruktur gering zu halten. Um einen vorteilhaften Schutz des Bauelements wie beispielsweise des elektrischen Energiespeichers zu realisieren, ist es ferner wünschenswert, den Querträger aus Stahl, mithin aus dem genannten, ersten Stahl zu bilden, das heißt herzustellen. Es wurde jedoch gefunden, dass beispielsweise dann, wenn als der erste Stahl ein Stahl mit einer sehr hohen Zugfestigkeit und dabei beispielsweise insbesondere ein höchstfester Stahl verwendet wird, zwar ein vorteilhafter Schutz des Bauelements realisiert werden kann, jedoch eine direkte Verbindung des aus dem ersten Stahl hergestellten Querträgers mit dem jeweiligen, als Leichtmetall-Gussteil ausgebildeten Längsträger beispielsweise durch Nieten nicht oder nur sehr aufwendig erfolgen kann, insbesondere aufgrund einer ungünstigen Festigkeit eines Nietpunkts bei einer solchen Materialkombination aus dem ersten Stahl und dem Leichtmetall beziehungsweise der Leichtmetalllegierung, welche eine Leichtmetall-Gusslegierung ist. Der erste Stahl beziehungsweise dessen Verwendung ist jedoch insbesondere im Hinblick auf eine Realisierung eines hohen Seitenaufprallschutzes vorteilhaft, da über den aus dem ersten Stahl gebildeten Querträger unfallbedingte Lasten in Fahrzeugquerrichtung vorteilhaft übertragen werden können, um dadurch beispielsweise das Bauelement vor übermäßigen, in Fahrzeugquerrichtung wirkenden, unfallbedingten Lasten zu schützen.

Um nun die zuvor genannten Probleme zu vermeiden, ist der aus dem ersten Stahl gebildete Querträger nicht oder nicht nur direkt an dem jeweiligen, auch als Guss-Längsträger oder Leichtmetallguss-Längsträger bezeichneten Längsträger gefügt, sondern der Querträger ist, insbesondere direkt, mit der Stahlstruktur verbunden, das heißt mit der Stahlstruktur oder an die Stahlstruktur gefügt. Des Weiteren ist die Stahlstruktur, insbesondere direkt, mit dem jeweiligen Längsträger verbunden, das heißt mit dem jeweiligen Längsträger oder an den jeweiligen Längsträger gefügt, sodass der jeweilige Längsträger über die Stahlstruktur, das heißt unter Vermittlung der Stahlstruktur, mit dem Querträger verbunden, das heißt gefügt, und somit an dem Querträger angebunden ist. Somit ist beispielsweise der jeweilige Längsträger nicht oder nicht nur direkt mit dem Querträger verbunden, sondern der jeweilige Längsträger ist über die Stahlstruktur mit dem Querträger verbunden. Durch Verwendung der Stahlstruktur, das heißt durch Verwendung des von der Leichtmetalllegierung, aus welcher die Längsträger gebildet sind, und von dem ersten Stahl unterschiedlichen, zweiten Stahls kann sowohl eine besonders vorteilhafte und insbesondere hinreichend feste Verbindung der Stahlstruktur mit dem Querträger als auch eine besonders vorteilhafte und insbesondere hinreichend feste Verbindung der Stahlstruktur mit dem jeweiligen Längsträger gewährleistet werden, sodass insgesamt die Längsträger vorteilhaft an dem Querträger über die Stahlstruktur angebunden werden können. Dabei kann der zweite Stahl ein vorteilhaft fester Werkstoff, das heißt ein Werkstoff mit einer vorteilhaft hohen Zugfestigkeit, sein, wobei jedoch vorzugsweise der zweite Stahl weniger fest ist als der erste Stahl, das heißt gegenüber dem ersten Stahl eine geringere Festigkeit beziehungsweise Zugfestigkeit aufweist. Hierdurch kann auf gewichtsgünstige Weise ein vorteilhaftes Unfallverhalten realisiert werden. Des Weiteren ist es möglich, die Stahlstruktur nicht oder nicht nur als einfachen Adapter zu verwenden, um die oben beschriebene Fügeproblematik bei dem direkten Fügen des jeweiligen Längsträgers beziehungsweise der als Leichtmetall-Gusslegierung ausgebildeten Leichtmetalllegierung mit dem Querträger beziehungsweise mit dem ersten Stahl zu überbrücken, das heißt zu lösen, sondern die Stahlstruktur kann als Verstärkungsstruktur oder Verstärkungsbauteil verwendet werden oder fungieren, insbesondere derart, dass die Stahlstruktur gemeinsam mit den als Gusslängsträgern ausgebildeten Längsträgern einen gemeinsamen, vorteilhaft stabilen Lastpfad bildet, über welchen insbesondere bei einer unfallbedingten Kraftbeaufschlagung unfallbedingte Lasten besonders vorteilhaft geführt und insbesondere von dem zuvor genannten Bereich ferngehalten beziehungsweise um den Bereich herum geführt werden können.

Da der jeweilige Längsträger durch Gießen hergestellt ist, ist der jeweilige Längsträger ein Gussteil, wobei das Gießen, durch welches der jeweilige Längsträger hergestellt ist, eine erste Herstellungstechnologie beziehungsweise ein erstes Herstellungsverfahren ist. Der Querträger sowie beispielsweise die Stahlstruktur sind beispielsweise durch Umformen hergestellt, wobei das Umformen eine zweite Herstellungstechnologie beziehungsweise ein zweites Herstellungsverfahren ist, welches von dem Gießen unterschiedlich ist. Die Erfindung ermöglicht es, die beiden Herstellungstechnologien geschickt miteinander zu kombinieren, wobei durch Verwendung sowohl des Querträgers als auch der Stahlstruktur und der Längsträger ein etwaiger, aus der gegenüber dem ersten Stahl geringen Zugfestigkeit geringeren Zugfestigkeit des zweiten Stahls resultierender Nachteil zumindest kompensiert werden kann. Da bei der erfindungsgemäßen Karosseriestruktur sowohl die Leichtmetalllegierung als auch der erste Stahl und der zweite Stahl verwendet werden, ist die erfindungsgemäße Karosseriestruktur sozusagen ein Hybridbauteil, mithin eine Hybridstruktur, durch welche ein besonders vorteilhaftes Unfallverhalten dargestellt werden kann. Die Längsträger sind dabei Gussteile, mithin Gusskomponenten, die es insbesondere aufgrund einer insbesondere gegenüber Blechbauteilen größeren, gussspezifischen Gestaltungsfreiheit vermag, aufzunehmende beispielsweise unfallbedingte Lasten besonders vorteilhaft an, insbesondere allen, Kontaktstellen zur Blechstruktur zu verteilen, um dadurch beispielsweise im Falle eines Unfalls übermäßige, lokale Lastspitzen zu vermeiden. Beispielsweise ist es vorgesehen, dass an den genannten Kontaktstellen der Gusskomponenten zu der insbesondere als Verstärkungsbauteil ausgebildeten oder fungierenden Stahlstruktur die Gusskomponenten die Stahlstruktur, insbesondere direkt, kontaktieren, mithin berühren. Insbesondere fällt beispielsweise eine erste der Kontaktstellen mit der ersten Fügestelle und eine zweite der Kontaktstellen mit der zweiten Fügestelle zusammen.

Um ein besonders vorteilhaftes Unfallverhalten auf besonders gewichtsgünstige Weise realisieren zu können, ist es bei einer Ausführungsform der Erfindung vorgesehen, dass der jeweilige Längsträger als ein jeweiliges Leichtmetall-Druckgussteil ausgebildet ist. Mit anderen Worten ist der jeweilige Längsträger durch Druckgießen, das heißt durch ein Druckgussverfahren, hergestellt, sodass es sich vorzugsweise bei dem zuvor genannten Gießen, durch welches der jeweilige Längsträger hergestellt ist, um Druckgießen, das heißt um Druckguss beziehungsweise ein Druckgussverfahren handelt.

Eine weitere Ausführungsform zeichnet sich dadurch aus, dass der jeweilige Längsträger als ein jeweiliges Aluminium-Gussteil, insbesondere als ein jeweiliges Aluminium-Druckgussteil, ausgebildet ist, sodass der jeweilige Längsträger vorzugsweise ein Aluminium-Guss-Längsträger, insbesondere ein Aluminium-Druckguss-Längsträger, ist. Somit handelt es sich vorzugsweise bei dem zuvor genannten Leichtmetall um Aluminium. Mit anderen Worten handelt es sich beispielsweise bei der zuvor genannten Leichtmetalllegierung um eine Aluminiumlegierung, insbesondere um eine Aluminiumgusslegierung. Somit ist der jeweilige Längsträger vorzugsweise durch Aluminium-Guss, insbesondere durch Aluminium-Druckguss, hergestellt. Hierdurch können unfallbedingte Lasten besonders vorteilhaft geführt werden, insbesondere dadurch, dass durch den jeweiligen Längsträger ein besonders vorteilhafter Lastpfad ausgebildet werden kann.

Um den zuvor genannten Bereich und somit das in dem Bereich anordenbare oder angeordnete Bauelement vorteilhaft schützen und somit ein besonders gutes Unfallverhalten realisieren zu können, ist es in weiterer Ausgestaltung der Erfindung vorgesehen, dass der Querträger als ein Stahlblechteil, insbesondere als ein Stahlblechumformteil, ausgebildet ist. Mit anderen Worten ist der Querträger vorzugsweise aus einem Stahlblech gebildet, sodass es sich vorzugsweise bei dem ersten Werkstoff um ein Stahlblech handelt. Ganz vorzugsweise ist der Querträger durch Umformen, insbesondere durch Tiefziehen, hergestellt, sodass der Querträger ein Umformteil ist. Hierdurch kann eine besonders hohe Steifigkeit des Querträgers realisiert werden, sodass sich insbesondere ein besonders vorteilhafter Seitenaufprallschutz darstellen lässt. Insbesondere ermöglicht es der Querträger, beispielsweise im Falle eines Seitenaufpralls übermäßige Intrusionen in den genannten Bereich zu vermeiden beziehungsweise in Fahrzeugquerrichtung betrachtet eine vorteilhaft hohe Stabilität beziehungsweise Steifigkeit der Karosseriestruktur zu schaffen.

Um die Längsträger besonders vorteilhaft an den Querträger anbinden und somit eine besonders hohe Stabilität beziehungsweise Steifigkeit der Karosseriestruktur insgesamt darstellen zu können, ist es bei einer weiteren Ausführungsform der Erfindung vorgesehen, dass die Stahlstruktur aus Stahlblech, insbesondere aus ungeformtem Stahlblech, gebildet ist. Mit anderen Worten ist vorzugsweise der zweite Stahl ein Stahlblech, insbesondere ein umgeformtes Stahlblech.

Bei einer weiteren, besonders vorteilhaften Ausführungsform der Erfindung ist der erste Stahl ein höchstfester Stahl mit einer Zugfestigkeit von über 700 Megapascal, insbesondere mit einer Zugfestigkeit von über 1.000 Megapascal. Hierdurch weist der Querträger eine besonders hohe Festigkeit, insbesondere Zugfestigkeit, auf, sodass eine besonders hohe Steifigkeit und somit Stabilität der Karosseriestruktur insgesamt dargestellt werden kann. Insbesondere kann es sich beispielsweise bei dem ersten Stahl um einen Dualphasen-Stahl handeln, welcher auch als DP-Stahl bezeichnet wird. Wie hinlänglich bekannt ist, gehören die Dualphasen-Stähle wie die TRIP-Stähle und die Komplexphasen-Stähle zu den Mehrphasen-Stählen. Ferner ist es denkbar, dass der erste Stahl ein Komplexphasen-Stahl ist, welcher auch als CP-Stahl bezeichnet wird. Im Vergleich zu WP-Stählen weisen CP-Stähle signifikant höhere Streckgrenzen insbesondere bei gleicher Zugfestigkeit auf. Eine Bezeichnung eines der Dualphasen-Stähle ist beispielsweise DP 500. Eine Bezeichnung eines der Komplexphasen-Stähle ist beispielsweise CP 800. Ferner ist es beispielsweise denkbar, dass der erste Stahl ein TRIP-Stahl oder ein Restaustenit- Stahl ist, wobei der Restaustenit-Stahl auch als RA-Stahl bezeichnet wird. TRIP-Stähle (TRIP - Transformation Induced Plasticity - umwandlungsbewegte Plastizität) weisen eine extreme kalte Befestigung beziehungsweise ein extremes Kaltbefestigungsvermögen auf. Dies hat den Vorteil einer vorteilhaften Umformbarkeit insbesondere in Verbindung mit hoher Bauteilendfestigkeit. Eine Bezeichnung eines der TRIP-Stähle ist beispielsweise TRIP 700. Daher kann es sich beispielsweise bei dem ersten Stahl um einen Martensitphasen-Stahl handeln, welcher auch als MS-Stahl bezeichnet wird. Martensitphasen-Stähle haben eine hohe Grundfestigkeit und eignen sich besonders vorteilhaft als Seitenaufprallträger. Eine Bezeichnung eines der Martensitphasen-Stähle lautet beispielsweise MS-W 1000.

Um eine besonders hohe Festigkeit des Querträgers und somit eine besonders hohe Steifigkeit der Karosseriestruktur und in der Folge ein vorteilhaftes Unfallverhalten realisieren zu können, ist es in weiterer Ausgestaltung der Erfindung vorgesehen, dass der erste Stahl ein pressgehärteter Stahl ist. Mit anderen Worten ist somit vorzugsweise der Querträger pressgehärtet, das heißt durch Presshärten gehärtet.

Um die Stahlstruktur besonders vorteilhaft sowohl, insbesondere direkt, an dem Querträger als auch, insbesondere direkt, an dem jeweiligen Längsträger anbinden zu können, sodass in der Folge die Längsträger über die Stahlstruktur und den Querträger besonders vorteilhaft miteinander verbunden werden können, ist es in weiterer Ausgestaltung der Erfindung vorgesehen, dass der zweite Stahl ein Stahl mit einer Zugfestigkeit von weniger als 500 Megapascal und mehr als 300 Megapascal, insbesondere mehr als 400 Megapascal, ist.

Um die Längsträger besonders vorteilhaft und gewichtsgünstig an den Querträger anbinden und somit ein besonders vorteilhaftes Unfallverhalten der Karosseriestruktur auf besonders gewichtsgünstige Weise realisieren zu können, ist es bei einer weiteren Ausführungsform der Erfindung vorgesehen, dass die Stahlstruktur ein dem ersten Längsträger zugeordnetes, aus dem zweiten Stahl gebildetes, erstes Zwischenbauteil aufweist, welches beispielsweise ein erstes der zuvor genannten Teile der Stahlstruktur ist. Das erste Zwischenbauteil ist separat von dem Querträger und separat von den Längsträgern ausgebildet. Außerdem ist das erste Zwischenbauteil, insbesondere direkt, mit dem ersten Längsträger verbunden. Außerdem ist das erste Zwischenbauteil, insbesondere direkt, mit dem Querträger verbunden. Beispielsweise ist das erste Zwischenbauteil an der ersten Fügestelle, insbesondere direkt, mit dem ersten Längsträger verbunden, und beispielsweise ist das erste Zwischenbauteil an der dritten Fügestelle, insbesondere direkt, mit dem Querträger verbunden.

Dabei weist die Karosseriestruktur ein dem zweiten Längsträger zugeordnetes, zweites Zwischenbauteil auf, welches aus dem zweiten Stahl gebildet ist. Das zweite Zwischenbauteil ist separat von dem Querträger, separat von den Längsträgern und separat von dem ersten Zwischenbauteil ausgebildet. Außerdem ist das zweite Zwischenbauteil, insbesondere direkt, mit dem zweiten Längsträger verbunden, und das zweite Zwischenbauteil ist außerdem, insbesondere direkt, mit dem Querträger verbunden. Beispielsweise ist das zweite Zwischenbauteil an der zweiten Fügestelle, insbesondere direkt, mit dem zweiten Längsträger verbunden. Ferner ist es denkbar, dass das zweite Zwischenbauteil an der vierten Fügestelle, insbesondere direkt, mit dem Querträger verbunden ist.

Um wenigstens einen besonders vorteilhaften Lastpfad und somit ein besonders vorteilhaftes Unfallverhalten realisieren zu können, ist es bei einer weiteren Ausführungsform der Erfindung vorgesehen, dass ein jeweiliger, insbesondere als jeweiliger Endbereich des jeweiligen Längsträgers ausgebildeter, Längenbereich des jeweiligen Längsträgers in der Stahlstruktur, insbesondere in dem jeweils zugeordneten Zwischenbauteil, aufgenommen und somit in einem Inneren der Stahlstruktur angeordnet ist. Dabei ist es insbesondere denkbar, dass der jeweilige Längenbereich und somit der jeweilige Längsträger innerhalb der Stahlstruktur mit der Stahlstruktur verbunden ist. Mit anderen Worten, vorzugsweise ist der jeweilige Längenbereich des jeweiligen Längsträgers in einer jeweiligen, korrespondierenden Aufnahme der Stahlstruktur aufgenommen, wodurch der jeweilige Längenbereich in der Stahlstruktur angeordnet ist. Dabei ist es vorzugsweise vorgesehen, dass der jeweilige Längenbereich und somit der jeweilige Längsträger in der Aufnahme, insbesondere direkt, mit der Stahlstruktur verbunden ist. Da der jeweilige Längenbereich des jeweiligen Längsträgers in der Stahlstruktur, mithin in der jeweiligen Aufnahme, angeordnet ist, umhaust oder umklammert beispielsweise die Stahlstruktur den jeweiligen Längenbereich, sodass sozusagen durch die Stahlstruktur beispielsweise eine jeweilige Umhausung, insbesondere Umklammerung, des jeweiligen Endbereichs gebildet ist. Hierdurch kann eine besonders vorteilhafte Anbindung der Längsträger an die Stahlstruktur realisiert werden. Außerdem ist es möglich, die Stahlstruktur besonders vorteilhaft an umliegende oder angrenzende Lastpfade, das heißt beispielsweise an angrenzende oder umliegende, weitere Bauteile der Karosseriestruktur anbinden zu können, insbesondere durch Schweißen und ganz insbesondere durch Punktschweißen, das heißt durch Schweißverbindungen, insbesondere durch Punktschweißverbindungen, wodurch sich ein besonders vorteilhaftes Unfallverhalten darstellen lässt.

Um das Gewicht der Karosseriestruktur besonders gering halten zu können, ist es in weiterer Ausgestaltung der Erfindung vorgesehen, dass die Längsträger als separat voneinander ausgebildete und zumindest über die Stahlstruktur und den Querträger miteinander verbundenen Komponenten ausgebildet sind.

Um eine besonders hohe Steifigkeit der Karosseriestruktur realisieren zu können, ist es alternativ vorgesehen, dass die Längsträger einstückig miteinander ausgebildet und dadurch durch ein einziges, auch als Monoblock bezeichnetes Stück gebildet sind, wobei das Stück durch das zuvor genannte Gießen, insbesondere Druckgießen, hergestellt ist. Dabei weist das Stück auch wenigstens einen zweiten Querträger auf, sodass der zweite Querträger einstückig mit den Längsträgern ausgebildet ist. Mit anderen Worten sind die Längsträger und der zweite Querträger durch das einzige, gemeinsame Stück, mithin durch den Monoblock, gebildet. Hierunter ist zu verstehen, dass die Längsträger und der zweite Querträger nicht etwa als separat voneinander ausgebildete und miteinander verbundene Komponenten ausgebildet sind, sondern die Längsträger und der zweite Querträger sind aus einem einzigen Stück gebildet. Der zweite Längsträger weist eine Längserstreckungsrichtung auf, welche zumindest im Wesentlichen parallel zur Fahrzeugquerrichtung verläuft. Beispielsweise fällt die Längserstreckungsrichtung des zweiten Längsträgers mit der Längserstreckungsrichtung des ersten Längsträgers zusammen, oder die Längserstreckungsrichtungen des ersten Querträgers und des zweiten Querträgers sind insbesondere in Fahrzeuglängsrichtung voneinander beabstandet und verlaufen zumindest im Wesentlichen parallel zueinander.

Es ist denkbar, dass der erste Längsträger und der zweite Längsträger in Fahrzeuglängsrichtung aufeinanderfolgend angeordnet sind, insbesondere derart, dass der erste Längsträger außerhalb des zweiten Längsträgers und der zweite Längsträger außerhalb des ersten Längsträgers angeordnet sind. Ferner ist es jedoch denkbar, dass beispielsweise der erste Längsträger in dem zweiten Längsträger angeordnet, das heißt aufgenommen, ist, sodass sozusagen beispielsweise der zweite Längsträger den ersten Längsträger umgibt, umhaust oder umhüllt.

Schließlich hat es sich zur Realisierung eines besonders guten Unfallverhaltens besonders vorteilhaft gezeigt, wenn die Karosseriestruktur als eine Hinterwagenstruktur für ein Heck der Karosserie ausgebildet ist. Somit ist es vorzugsweise vorgesehen, dass die Karosseriestruktur in vollständig hergestelltem Zustand des Personenkraftwagens an dem Heck der Karosserie und somit an dem Heck des Personenkraftwagens angeordnet ist.

Ein zweiter Aspekt der Erfindung betrifft eine insbesondere selbsttragende Karosserie für einen Personenkraftwagen, wobei die Karosserie eine Karosseriestruktur gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Ein dritter Aspekt der Erfindung betrifft einen auch als Fahrzeug bezeichneten Personenkraftwagen, welcher eine insbesondere als selbsttragende Karosserie ausgebildete Karosserie gemäß dem zweiten Aspekt der Erfindung aufweist. Vorteile und vorteilhafte Ausgestaltungen des ersten Aspekts und des zweiten Aspekts der Erfindung sind als Vorteile und vorteilhafte Ausgestaltungen des dritten Aspekts der Erfindung anzusehen und umgekehrt.

Weitere Einzelheiten der Erfindung ergeben sich aus der nachfolgenden Beschreibung eines bevorzugten Ausführungsbeispiels mit den zugehörigen Zeichnungen. Dabei zeigt:
- Fig. 1: ausschnittsweise eine schematische Unteransicht einer als Hinterwagenstruktur ausgebildeten Karosseriestruktur für eine selbsttragende Karosserie eines Personenkraftwagens;
- Fig. 2: ausschnittsweise eine weitere schematische Unteransicht der Karosseriestruktur;
- Fig. 3: eine schematische Querschnittsansicht der Karosseriestruktur entlang einer in Fig. 2 gezeigten Schnittlinie A-A; und
- Fig. 4: ausschnittsweise eine schematische Perspektivansicht der Karosseriestruktur.

In den Fig. sind gleiche oder funktionsgleiche Elemente mit gleichen Bezugszeichen versehen.

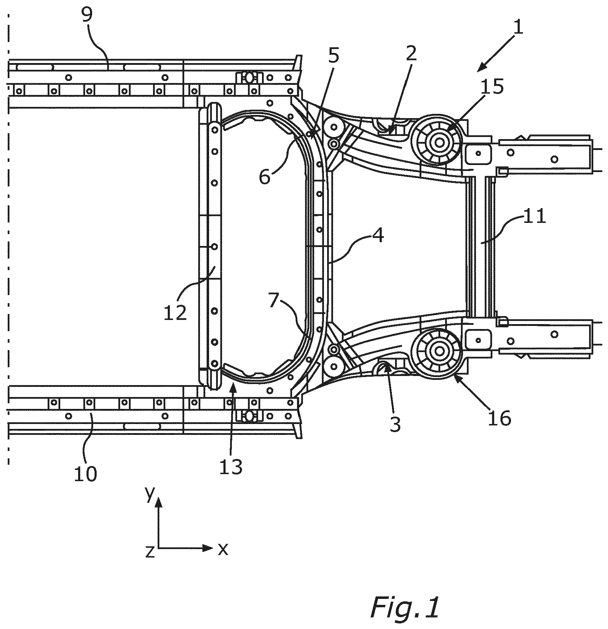

Fig. 1 zeigt in einer schematischen Unteransicht eine Karosseriestruktur 1 für eine selbsttragende Karosserie eines auch als Fahrzeug bezeichneten Personenkraftwagens, dessen Fahrzeuglängsrichtung in Fig. 1 mit x bezeichnet ist. Die Karosseriestruktur 1 weist zwei in Fahrzeugquerrichtung des Personenkraftwagens voneinander beabstandete Längsträger 2 und 3 auf, wobei die Fahrzeugquerrichtung in Fig. 1 mit y bezeichnet ist. Insbesondere sind die Längsträger 2 und 3 in Fahrzeughochrichtung des Personenkraftwagens, dessen Fahrzeughochrichtung in Fig. 1 mit z bezeichnet ist, auf gleicher Höhe angeordnet. Bei dem in den Fig. gezeigten Ausführungsbeispiel sind die Längsträger 2 und 3 als Aluminium-Druckguss-Längsträger, das heißt als Aluminium-Druckgussteile ausgebildet. Dies bedeutet, dass die jeweiligen Längsträger 2, 3 durch Druckgießen, das heißt durch ein Druckgussverfahren, aus einer Aluminiumlegierung, das heißt aus einer Aluminiumgusslegierung und dabei insbesondere aus einer Aluminiumdruckgusslegierung, hergestellt ist. Dabei sind die Längsträger 2 und 3 aus der gleichen Aluminiumlegierung hergestellt. Die Aluminiumlegierung ist eine Leichtmetalllegierung, wodurch das jeweilige Gewicht des jeweiligen Längsträgers 2, 3 besonders gering gehalten werden kann.

Die Karosseriestruktur 1 weist einen ersten Querträger 4 auf, welcher aus einem ersten Stahl gebildet ist. Bei dem in den Fig. gezeigten Ausführungsbeispiel ist der erste Stahl ein pressgehärteter, höchstfester Stahl, dessen auch als erste Zugfestigkeit bezeichnete Zugfestigkeit größer als 700 Megapascal ist. Insbesondere beträgt die erste Zugfestigkeit mindestens oder genau 1000 Megapascal. Ganz vorzugsweise ist die erste Zugfestigkeit größer als 1000 Megapascal. Des Weiteren ist der erste Stahl ein Stahlblech, sodass der Querträger 4 als Stahlblechteil ausgebildet ist. Insbesondere ist der Querträger 4 umgeformt, sodass ganz vorzugsweise der Querträger 4 ein Stahlblechumformteil ist. Der Querträger 4 ist separat von den Längsträgern 2 und 3 ausgebildet und zumindest oder vorliegend ausschließlich mittelbar mit den Längsträgern 2 und 3 verbunden, sodass die Längsträger 2 und 3 über den Querträger 4 miteinander verbunden sind.

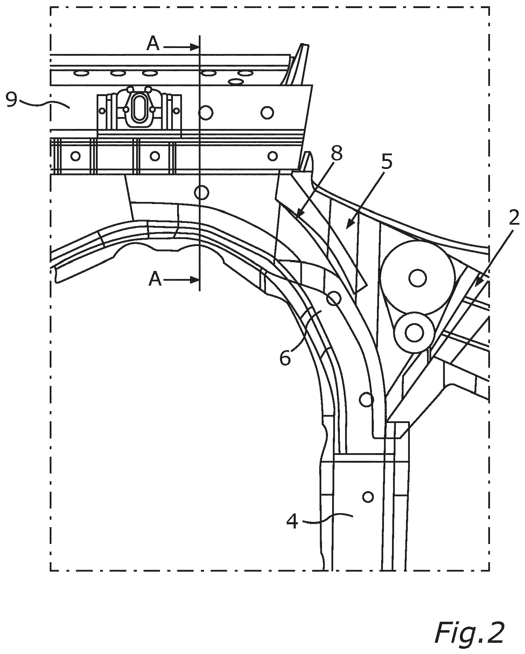

Besonders gut in Zusammenschau mit Fig. 2 bis 4 ist erkennbar, dass die Karosseriestruktur 1 außerdem eine Stahlstruktur 5 aufweist, welche aus einem von dem ersten Stahl unterschiedlichen, zweiten Stahl gebildet ist, dessen auch als zweite Zugfestigkeit bezeichnete Zugfestigkeit geringer als die Zugfestigkeit des ersten Stahls ist. Somit ist der zweite Stahl ein von dem ersten Stahl unterschiedlicher Werkstoff. Der erste Stahl ist ein von der Aluminiumlegierung, aus welcher der Längsträger 2 und 3 gebildet sind, unterschiedlicher Werkstoff, und der zweite Stahl ist ein von der Aluminiumlegierung unterschiedlicher Werkstoff. Die Stahlstruktur 5 ist separat von dem Querträger 4 und separat von den Längsträgern 2 und 3 ausgebildet und, insbesondere direkt, mit den Längsträgern 2 und 3 und, insbesondere direkt, mit dem Querträger 4 verbunden, wodurch der jeweilige Längsträger 2, 3, insbesondere direkt, mit der Stahlstruktur 5 verbunden ist. Somit sind die Längsträger 2 und 3 über die Stahlstruktur 5 und über den Querträger 4 miteinander verbunden.

Bei dem in den Fig. gezeigten Ausführungsbeispiel ist der zweite Stahl ein Stahlblech, insbesondere ein umgeformtes Stahlblech, sodass die Stahlstruktur 5 als Stahlblech, insbesondere als umgeformtes Stahlblech, gebildet ist. Beispielsweise ist die zweite Zugfestigkeit geringer als 500 Megapascal und größer als 300 Megapascal. Insbesondere ist die zweite Zugfestigkeit geringer als 500 Megapascal und größer als 400 Megapascal. Dadurch kann die Stahlstruktur 5 sowohl besonders vorteilhaft mit den Längsträgern 2 und 3 als auch besonders vorteilhaft an den Querträger 4 angebunden werden, sodass auf besonders gewichtsgünstige Weise ein besonders gutes Unfallverhalten der Karosseriestruktur 1 dargestellt werden kann.

Bei dem in den Fig. gezeigten Ausführungsbeispiel ist die Stahlstruktur 5 mehrteilig ausgebildet. Hierbei weist die Stahlstruktur 5 ein dem Längsträger 2 zugeordnetes, aus dem zweiten Stahl gebildetes, erstes Zwischenbauteil 6 auf, welches auch als erstes Teil der Stahlstruktur 5 bezeichnet wird. Der Längsträger 2 wird auch als erster Längsträger bezeichnet. Das erste Zwischenbauteil 6 ist separat von dem Querträger 4 und separat von den Längsträgern 2 und 3 ausgebildet. Außerdem ist das erste Zwischenbauteil 6, insbesondere direkt, mit dem Längsträger 2 verbunden. Des Weiteren ist das Zwischenbauteil 6, insbesondere direkt, mit dem Querträger 4 verbunden. Beispielsweise ist das Zwischenbauteil 6 mit dem Längsträger 2, insbesondere, vernietet und somit, insbesondere direkt, durch Nieten mit dem Längsträger 2 verbunden. Alternativ oder zusätzlich ist beispielsweise das Zwischenbauteil 6 mit dem Querträger 4, insbesondere direkt, verschweißt und somit, insbesondere direkt, durch Schweißen mit dem Querträger 4 verbunden. Die Stahlstruktur 5 weist außerdem ein dem Längsträger 3 zugeordnetes, zweites Zwischenbauteil 7 auf, welches ein zweites Teil der Stahlstruktur 5 ist. das Zwischenbauteil 7 ist aus dem zweiten Stahl gebildet. Das Zwischenbauteil 7 ist separat von dem Querträger 4, separat von den Längsträgern 2 und 3 und separat von dem ersten Zwischenbauteil 6 ausgebildet. Des Weiteren ist das Zwischenbauteil 7, insbesondere direkt, mit dem Längsträger 3 verbunden, welcher auch als zweiter Längsträger bezeichnet wird. Ferner ist das Zwischenbauteil 7, insbesondere direkt, mit dem Querträger 4 verbunden. Beispielsweise ist das Zwischenbauteil 7, insbesondere direkt, mit dem Längsträger 3 vernietet und somit, insbesondere direkt, mit dem Längsträger 3 durch Nieten verbunden. Alternativ oder zusätzlich ist beispielsweise das Zwischenbauteil 7, insbesondere direkt, mit dem Querträger 4 verschweißt und somit durch Schweißen, insbesondere direkt, mit dem Querträger 4 verbunden.

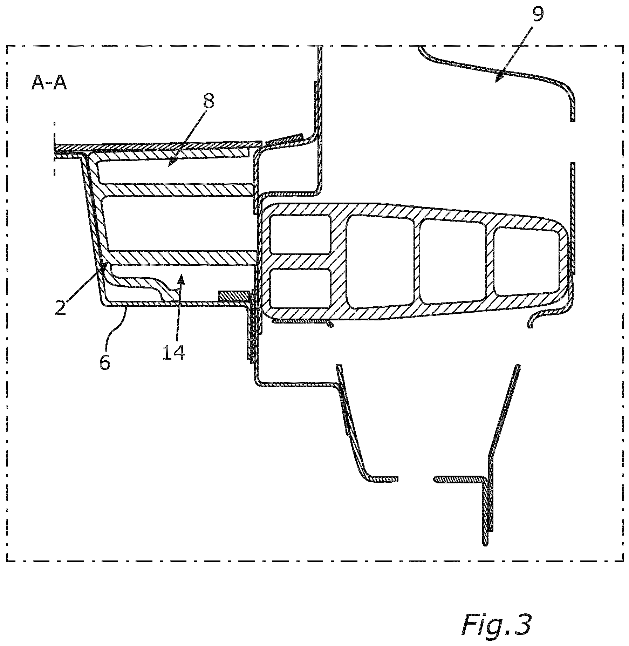

Aus Fig. 2 ist am Beispiel des Zwischenbauteils 6 und des Längsträgers 2 erkennbar, dass das jeweilige Zwischenbauteil 6, 7, wobei in Fig. 2 das Zwischenbauteil 6 transparent dargestellt ist, eine Aufnahme 14 aufweist, in welcher ein jeweiliger, als Endbereich 8 ausgebildeter Längenbereich des jeweiligen Längsträgers 2, 3 angeordnet ist. Hierdurch umhaust oder Umklammert das jeweilige Zwischenbauteil 6, 7 den jeweiligen Endbereich 8 des jeweiligen Längsträgers 2, 3. Insbesondere ist es vorgesehen, dass der jeweilige Längsträger 2, 3 in der jeweiligen Aufnahme 14 des jeweiligen Zwischenbauteils 6, 7, insbesondere direkt, mit dem jeweiligen Zwischenbauteil 6, 7 verbunden ist. Die Aufnahme 14 des Zwischenbauteils 6 ist besonders gut aus Fig. 3 erkennbar.

Bei dem in den Fig. gezeigten Ausführungsbeispiel sind die Längsträger 2 und 3 separat voneinander ausgebildete und mittelbar miteinander verbundene Komponenten, die über die Stahlstruktur 5 und den Querträger 4 miteinander verbunden sind.

Besonders gut aus Fig. 1 ist erkennbar, dass die Karosseriestruktur 1 zusätzlich zu den Längsträgern 2 und 3 vorgesehene, seitliche Längsträger 9 und 10 aufweist, welche auch als Seitenschweller bezeichnet werden. Die seitlichen Längsträger 9 und 10, welche auch als zweite Längsträger bezeichnet werden, sind in Fahrzeugquerrichtung voneinander beabstandet. Der seitliche Längsträger 9 ist dem Zwischenbauteil 6 zugeordnet und dabei zumindest oder ausschließlich über das Zwischenbauteil 6 mit dem Längsträger 2 verbunden, insbesondere dadurch, dass das Zwischenbauteil 6, insbesondere direkt, mit dem Längsträger 9 verbunden ist. Entsprechendes gilt für den seitlichen Längsträger 10 und den Längsträger 3. Der seitliche Längsträger 10 ist zumindest oder ausschließlich über das Zwischenbauteil 7 mit dem Längsträger 3 verbunden, insbesondere dadurch, dass das Zwischenbauteil 7, insbesondere direkt, mit dem seitlichen Längsträger 10 verbunden ist. Somit ist der seitliche Längsträger 10 dem Zwischenbauteil 7 zugeordnet. Es ist erkennbar, dass die seitlichen Längsträger 9 und 10 in Fahrzeugquerrichtung betrachtet weiter außen als die hinteren Längsträger 2 und 3 angeordnet sind, welche in Fahrzeuglängsrichtung betrachtet weiter hinten als die seitlichen Längsträger 9 und 10 angeordnet sind. Hierunter ist insbesondere zu verstehen, dass sich die seitlichen Längsträger 9 und 10 in Fahrzeuglängsrichtung nach vorne hin und somit in Richtung einer Front des Personenkraftwagens zumindest an jeweilige Teilbereiche der Längsträger 2 und 3 anschließen.

Bei dem in den Fig. gezeigten Ausführungsbeispiel ist der Querträger 4 beispielsweise in Schalenbauweise ausgebildet, sodass der Querträger 4 beispielsweise wenigstens oder genau zwei Schalenelemente aufweist, welche, insbesondere direkt, miteinander verbunden und somit unter Ausbildung des Querträgers 4 zusammengesetzt sind. Die Karosseriestruktur 1 weist dabei einen zusätzlich zu dem Querträger 4 vorgesehenen, zweiten Querträger 11 auf, welcher in Fahrzeuglängsrichtung weiter hinten und somit weiter in Richtung eines Hecks des Personenkraftwagens angeordnet ist als der Querträger 4. Dabei sind beispielsweise die Längsträger 2 und 3 über den Querträger 11 miteinander verbunden, insbesondere derart, dass der Querträger 11 zumindest mittelbar oder vorzugsweise direkt an die Längsträger 2 und 3 angebunden, das heißt gefügt, ist. Des Weiteren weist die Karosseriestruktur 1 einen zusätzlich zu den Querträgern 4 und 11 vorgesehenen, dritten Querträger 12 auf, über welchen beispielsweise die Zwischenbauteile 6 und 7 und/oder die seitlichen Längsträger 9 und 10 miteinander verbunden sind. Hierzu ist beispielsweise der Querträger 12, insbesondere direkt, an die seitlichen Längsträger 9 und 10 angebunden. Alternativ oder zusätzlich ist beispielsweise der Querträger 12, insbesondere direkt, an die Zwischenbauteile 6 und 7 angebunden. Insbesondere ist es vorgesehen, dass der Querträger 12 separat von den seitlichen Längsträgern 9 und 10 und separat von den Zwischenbauteilen 6 und 7 und auch separat von dem Querträger 4 und separat von dem Querträger 11 ausgebildet ist. Ferner ist es vorzugsweise vorgesehen, dass der Querträger 11 separat von den Längsträgern 2 und 3 und separat von dem Querträger 4 und separat von dem Querträger 12 und separat von den Zwischenbauteilen 6 und 7 und auch separat von den seitlichen Längsträgern 9 und 10 ausgebildet ist. Ferner ist beispielsweise der Querträger 12 separat von den Längsträgern 2 und 3 ausgebildet.

In vollständig hergestelltem Zustand des Personenkraftwagens ist beispielsweise ein separat von der selbsttragenden Karosserie ausgebildeter Hinterachsträger an der Karosseriestruktur 1 gehalten, das heißt befestigt, insbesondere derart, dass der Hinterachsträger, insbesondere direkt, an dem Querträger 4 und, insbesondere direkt, an dem Querträger 11 befestigt ist. Während der Hinterachsträger separat von der Karosserie ausgebildet und an der Karosserie gehalten ist, sodass der Hinterachsträger kein Bestandteil der selbsttragenden Karosserie ist, ist die Karosseriestruktur 1 ein fester Bestandteil der selbsttragenden Karosserie und somit fest, das heißt nicht zerstörungsfrei lösbar, mit der übrigen, selbsttragenden Karosserie verbunden.

Der Querträger 12 ist beispielsweise als ein Fersenblech oder wird auch als Fersenblech bezeichnet, wobei beispielsweise ein in den Fig. nicht dargestellter Hauptboden der Karosserie in Fahrzeuglängsrichtung nach hinten hin an dem Fersenblech endet. Ferner ist es denkbar, dass der Querträger 11 und/oder der Querträger 12 in Schalenbauweise ausgebildet sind. Somit ist insbesondere denkbar, dass der Querträger 11, 12 wenigstens oder genau zwei Schalenelemente aufweist, die, insbesondere direkt, miteinander verbunden und somit unter Bildung des jeweiligen Querträgers 11, 12 zusammengesetzt sein können. Insbesondere ist denkbar, dass der jeweilige Querträger 11, 12 aus Blech, insbesondere aus einem Stahlblech, gebildet und/oder umgeformt ist. Ferner ist es denkbar, dass der jeweilige, seitliche Längsträger 9, 10 aus Blech, insbesondere aus Stahlblech, gebildet und/oder umgeformt ist. Ferner ist es denkbar, dass der jeweilige Längsträger 9, 10 in Schalenbauweise ausgebildet ist, sodass beispielsweise der jeweilige, seitliche Längsträger 9, 10 wenigstens oder genau zwei Schalenelemente aufweist, welche separat voneinander ausgebildet und, insbesondere direkt, miteinander verbunden und somit unter Bildung des jeweiligen, seitlichen Längsträgers 9, 10 zusammengesetzt sind.

Der Querträger 12 kann aus dem ersten Stahl gebildet sein, aus welchem der Querträger 4 gebildet ist. Ferner ist es denkbar, dass der Querträger 12 aus einem von dem ersten Stahl unterschiedlichen, dritten Stahl gebildet ist, wobei der dritte Stahl beispielsweise dem zweiten Stahl entsprechen kann, oder der dritte Stahl ist ein von dem ersten Stahl und von dem zweiten Stahl unterschiedlicher, dritter Stahl.

Besonders gut aus Fig. 1 ist erkennbar, dass das jeweilige Zwischenbauteil 6, 7 zumindest im Wesentlichen C-förmig ausgebildet ist, wobei die zumindest im Wesentlichen C-förmigen Zwischenbauteile 6 und 7 durch die Querträger 4 und 12 zu einer zumindest im Wesentlichen ringförmigen, insbesondere geschlossenen, Struktur 13 ergänzt sind. Dies bedeutet, dass die vorliegend geschlossene, ringförmige Struktur 13 die Zwischenbauteile 6 und 7 und die Querträger 4 und 12 umfasst und insbesondere dadurch gebildet ist, dass der Querträger 4, insbesondere direkt, an die Zwischenbauteile 6 und 7 und der Querträger 12, insbesondere direkt, an die Zwischenbauteile 6 und 7 angebunden ist. Ferner ist aus Fig. 1 erkennbar, dass die ringförmige Struktur 13 in Fahrzeugquerrichtung nach außen hin beidseitig durch die seitlichen Längsträger 9 und 10 jeweils zumindest teilweise überlappt ist, sodass die ringförmige Struktur 13 in Fahrzeugquerrichtung betrachtet zumindest teilweise, insbesondere zumindest überwiegend oder vollständig, zwischen den seitlichen Längsträgern 9 und 10 angeordnet ist. Die ringförmige Struktur 13 ist oder fungiert als ein Verstärkungsrahmen, um ein besonders vorteilhaftes Unfallverhalten der Karosseriestruktur 1 realisieren zu können, insbesondere im Falle eines Seitenaufpralls. Dabei ist es vorgesehen, dass der höchstfeste sowie vorzugsweise pressgehärtete Querträger 4 beziehungsweise der Verstärkungsrahmen nicht direkt an die als Druckguss-Längsträger ausgebildeten Längsträger 2 und 3 gefügt wird, sondern mit den als Verstärkungsbauteilen ausgebildeten oder fungierenden Zwischenbauteilen 6 und 7 verbunden ist, welche dann ihrerseits, insbesondere direkt, an die als Druckgusskomponenten ausgebildeten Längsträger 2 und 3 gefügt sind. Das jeweilige, als Stahlbauteil ausgebildete Zwischenbauteil 6, 7 ist nicht oder nicht nur ein einfaches Adapterbauteil, um die Längsträger 2 und 3 über die Zwischenbauteile 6 und 7 an den Querträger 4 anzubinden, sondern das jeweilige Zwischenbauteil 6, 7 ist oder fungiert als ein Verstärkungsbauteil, insbesondere derart, dass das jeweilige Zwischenbauteil 6, 7 gemeinsam mit dem jeweiligen, als Aluminium-Druckgusslängsträger ausgebildeten Längsträger 2, 3 einen gemeinsamen, vorteilhaft stabilen Lastpfad bildet.

Aus Fig. 3 ist erkennbar, dass dadurch, dass der jeweilige Endbereich 8 des jeweiligen Längsträgers 2, 3 in der jeweiligen, in Fig. 3 mit 14 bezeichneten Aufnahme des jeweiligen Zwischenbauteils 6, 7 angeordnet ist, eine Einhausung, insbesondere Umklammerung, des jeweiligen Endbereichs 8 durch das jeweilige Zwischenbauteil 6, 7 geschaffen ist. Dabei übergreift und untergreift das jeweilige Zwischenbauteil 6, 7 den jeweiligen Endbereich 8, sodass das jeweilige Zwischenbauteil 6, 7, insbesondere direkt, mit dem jeweiligen, auf dessen jeweiliger Seite angeordneten, seitlichen Längsträger 9, 10 verbunden ist. Dies ist insbesondere derart realisiert, dass das jeweilige Zwischenbauteil 6, 7, insbesondere direkt, mit dem jeweiligen, seitlichen Längsträger 9, 10 verschweißt ist, insbesondere durch Punktschweißen, wodurch ein besonders gutes Unfallverhalten gewährleistet werden kann. Die seitlichen Längsträger 9 und 10 sind an die Zwischenbauteile 6 und 7 angrenzende beziehungsweise bezüglich der Zwischenbauteile 6, 7 umliegende Bauteile, welche vorteilhafte Lastpfade bilden oder bereitstellen können. Somit sind die Zwischenbauteile 6 und 7, insbesondere direkt, an die umliegenden, insbesondere durch die seitlichen Längsträger 9 und 10 gebildeten Lastpfade angebunden. Der jeweilige, als Gusskomponente ausgebildete Längsträger 2, 3 im Inneren des jeweiligen, als Verstärkungsbauteil wirkenden oder fungierenden Zwischenbauteils 6, 7 vermag es aufgrund einer gegenüber Blechbauteilen größeren, gussspezifischen Gestaltungsfreiheit, aufzunehmende Lasten vorteilhaft an alle Kontaktstelle zum jeweiligen, als Verstärkungsbauteil ausgebildeten oder fungierenden Zwischenbauteil 6, 7 zu verteilen, um hierdurch lokale Lastspitzen im Falle eines Unfalls vermeiden zu können.

Beispielsweise ist der jeweilige, seitliche Längsträger 9, 10 aus einem hochfesten Stahl gebildet, dessen auch als dritte Zugfestigkeit bezeichnete Zugfestigkeit geringer als die erste Zugfestigkeit ist. Beispielsweise entspricht die dritte Zugfestigkeit der zweiten Zugfestigkeit, oder die dritte Zugfestigkeit ist geringer oder größer als die zweite Zugfestigkeit.

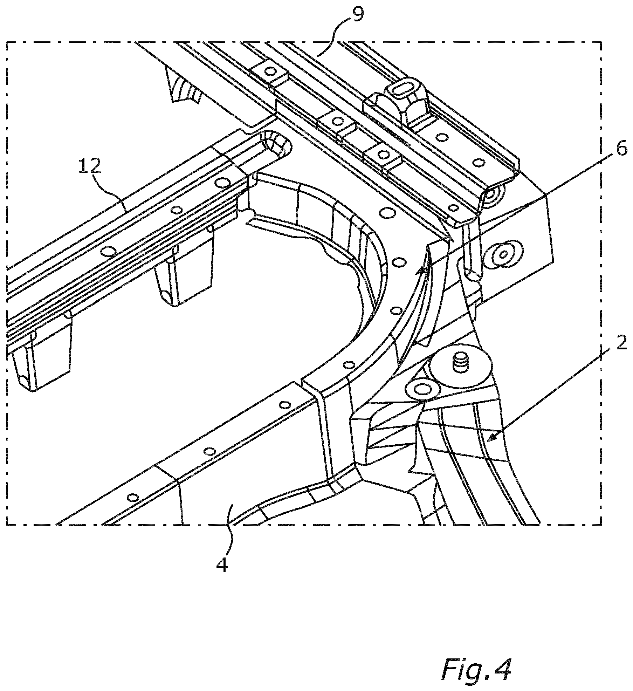

Besonders gut aus Fig. 4 ist die vorliegend direkte Anbindung des Zwischenbauteils 6 an den zugehörigen, seitlichen Längsträger 9, an den zugehörigen Längsträger 2, an den Querträger 4 und an den Querträger 12 erkennbar. Des Weiteren ist aus Fig. 1 erkennbar, dass der jeweilige Längsträger 2, 3 beispielsweise einen jeweiligen Abstützbereich 15, 16 aufweist, an welchem insbesondere in Fahrzeughochrichtung nach oben hin, ein Feder- und/oder Dämpferelement eines Fahrwerks des Personenkraftwagens abstützbar oder abgestützt ist. Das Feder- und/oder Dämpferelement ist somit beispielsweise einerseits, insbesondere einenends, in Fahrzeughochrichtung nach oben hin an dem jeweiligen Abstützbereich 15, 16 abstützbar, und andererseits, insbesondere andernends, ist das jeweilige Feder- und/oder Dämpferelement beispielsweise an den genannten Hinterachsträger angebunden.

Bei dem in den Fig. gezeigten Ausführungsbeispiel unterbleibt sowohl eine direkte Verbindung des Querträgers 4 mit dem Längsträger 2, als auch eine direkte Verbindung des Querträgers 4 mit dem Längsträger 3, sodass bei dem in den Fig. gezeigten Ausführungsbeispiel der Querträger 4 ausschließlich unter Vermittlung der Stahlstruktur 5 mit dem Längsträger 2 und ausschließlich unter Vermittlung der Stahlstruktur 5 mit dem Längsträger 3 verbunden ist.

Bei einer in den Fig. nicht gezeigten Ausführungsform ist es denkbar, dass die Längsträger 2 und 3 einstückig miteinander ausgebildet und somit durch ein einziges Stück, das heißt aus einem einzigen Stück, gebildet sind, welches auch als Monoblock bezeichnet wird. Der Monoblock weist beispielsweise einen zusätzlichen, weiteren Querträger auf, welcher somit einstückig mit den Längsträgern 2 und 3 ausgebildet ist. Dabei ist es denkbar, dass der Querträger 4 in dem weiteren Querträger angeordnet ist, oder der weitere Querträger ist in dem Querträger 4 angeordnet. Insbesondere bei dieser Ausführungsform ist es denkbar, dass der Querträger 4 direkt mit dem Längsträger 2 und direkt mit dem Längsträger 3 verbunden ist, wobei der Querträger 4 vorzugsweise auch direkt mit dem Zwischenbauteil 6 und direkt mit dem Zwischenbauteil 7 verbunden ist.

### Bezugszeichenliste

- 1: Karosseriestruktur
- 2: Längsträger
- 3: Längsträger
- 4: Querträger
- 5: Stahlstruktur
- 6: Zwischenbauteil
- 7: Zwischenbauteil
- 8: Endbereich
- 9: seitlicher Längsträger
- 10: seitlicher Längsträger
- 11: zweiter Querträger
- 12: dritter Querträger
- 13: Struktur
- 14: Aufnahme
- 15: Abstützbereich
- 16: Abstützbereich
- x: Fahrzeuglängsrichtung
- y: Fahrzeugquerrichtung
- z: Fahrzeughochrichtung

## Patentansprüche

1. Karosseriestruktur (1) für eine Karosserie eines Personenkraftwagens, mit zwei in Fahrzeugquerrichtung (y) voneinander beabstandeten Längsträgern (2, 3), mit wenigstens einem Querträger (4), welcher aus einem ersten Stahl gebildet ist, und mit einer aus einem von dem ersten Stahl unterschiedlichen, zweiten Stahl gebildeten Stahlstruktur (5),
**dadurch gekennzeichnet, dass**
die Längsträger (2, 3) als Leichtmetall-Gussteile ausgebildet sind, wobei die Strahlstruktur (5) mit den jeweiligen Längsträgern (2, 3) und mit dem Querträger (4) verbunden ist, wodurch der jeweilige Längsträger (2, 3) über die Stahlstruktur (5) mit dem Querträger (4) verbunden ist.

2. Karosseriestruktur (1) nach Anspruch 1,
**dadurch gekennzeichnet, dass**
der jeweilige Längsträger (2, 3) als ein jeweiliges Leichtmetall-Druckgussteil ausgebildet ist.

3. Karosseriestruktur (1) nach Anspruch 1 oder 2,
**dadurch gekennzeichnet, dass**
der jeweilige Längsträger (2, 3) als ein jeweiliges Aluminium-Gussteil ausgebildet ist.

4. Karosseriestruktur (1) nach einem der vorhergehenden Ansprüche,
**dadurch gekennzeichnet, dass**
der Querträger (4) als ein Stahlblechteil ausgebildet ist.

5. Karosseriestruktur (1) nach einem der vorhergehenden Ansprüche,
**dadurch gekennzeichnet, dass**
die Stahlstruktur (5) aus Stahlblech gebildet ist.

6. Karosseriestruktur (1) nach einem der vorhergehenden Ansprüche,
**dadurch gekennzeichnet, dass**
der erste Stahl ein höchstfester Stahl mit einer Zugfestigkeit von über 700 MPa ist.

7. Karosseriestruktur (1) nach einem der vorhergehenden Ansprüche,
**dadurch gekennzeichnet, dass**
der erste Stahl ein pressgehärteter Stahl ist.

8. Karosseriestruktur (1) nach einem der vorhergehenden Ansprüche,
**dadurch gekennzeichnet, dass**
der zweite Stahl ein Stahl mit einer Zugfestigkeit von weniger als 500 MPa und mehr als 300 MPa ist.

9. Karosseriestruktur (1) nach einem der vorhergehenden Ansprüche,
**dadurch gekennzeichnet, dass**
die Stahlstruktur (5) aufweist:
- ein einem ersten der Längsträger (2, 3) zugeordnetes, aus dem zweiten Stahl gebildetes, erstes Zwischenbauteil (6), welches separat von dem Querträger (4) und separat von den Längsträgern (2, 3) ausgebildet und mit ersten Längsträger (2) und mit dem Querträger (4) verbunden ist, und
- ein dem zweiten Längsträger (3) zugeordnetes, aus dem zweiten Stahl gebildetes, zweites Zwischenbauteil (7), welches separat von dem Querträger (4), separat von den Längsträgern (2, 3) und separat von dem ersten Zwischenbauteil (6) ausgebildet und mit zweiten Längsträger (3) und mit dem Querträger (4) verbunden ist.

10. Karosseriestruktur (1) nach einem der vorhergehenden Ansprüche,
**dadurch gekennzeichnet, dass**
ein jeweiliger Längenbereich (8) des jeweilige Längsträgers (2, 3) in der Stahlstruktur (5) aufgenommen ist.

11. Karosseriestruktur (1) nach einem der vorhergehenden Ansprüche,
**dadurch gekennzeichnet, dass**
die Längsträger (2, 3) als separat voneinander ausgebildete und zumindest über die Stahlstruktur (5) und den Querträger (4) miteinander verbundene Komponenten ausgebildet sind.

12. Karosseriestruktur (1) nach einem der Ansprüche 1 bis 10,
**dadurch gekennzeichnet, dass**
die Längsträger (2, 3) einstückig miteinander ausgebildet und dadurch durch ein einziges Stück gebildet sind, welches auch wenigstens einen zweiten Querträger aufweist.

13. Karosseriestruktur (1) nach einem der vorhergehenden Ansprüche,
**dadurch gekennzeichnet, dass**
die Karosseriestruktur (1) als eine Hinterwagenstruktur für ein Heck der Karosserie ausgebildet ist.

14. Karosserie für einen Personenkraftwagen, mit einer Karosseriestruktur (1) nach einem der vorhergehenden Ansprüche.

15. Personenkraftwagen, mit einer Karosserie nach Anspruch 14.

## Claims

1. Body structure (1) for a body of a passenger motor vehicle, having two longitudinal members (2, 3) which are spaced apart from one another in the vehicle transverse direction (y), having at least one crossmember (4) which is formed from a first steel, and having a steel structure (5) which is formed from a second steel which is different from the first steel,
**characterized in that**
the longitudinal members (2, 3) are in the form of light metal castings, wherein the steel structure (5) is connected to the respective longitudinal members (2, 3) and to the crossmember (4), as a result of which the respective longitudinal member (2, 3) is connected to the crossmember (4) via the steel structure (5).

2. Body structure (1) according to Claim 1,
**characterized in that**
the respective longitudinal member (2, 3) is in the form of a respective light metal die-cast part.

3. Body structure (1) according to Claim 1 or 2,
**characterized in that**
the respective longitudinal member (2, 3) is in the form of a respective aluminium casting.

4. Body structure (1) according to one of the preceding claims,
**characterized in that**
the crossmember (4) is in the form of a sheet steel part.

5. Body structure (1) according to one of the preceding claims,
**characterized in that**
the steel structure (5) is formed from sheet steel.

6. Body structure (1) according to one of the preceding claims,
**characterized in that**
the first steel is a high-strength steel with a tensile strength of more than 700 MPa.

7. Body structure (1) according to one of the preceding claims,
**characterized in that**
the first steel is a press-hardened steel.

8. Body structure (1) according to one of the preceding claims,
**characterized in that**
the second steel is a steel with a tensile strength of less than 500 MPa and more than 300 MPa.

9. Body structure (1) according to one of the preceding claims,
**characterized in that**
the steel structure (5) has:
- a first intermediate component (6), which is assigned to a first one of the longitudinal members (2, 3), is formed from the second steel, is formed separately from the crossmember (4) and separately from the longitudinal members (2, 3), and is connected to the first longitudinal member (2) and to the crossmember (4), and
- a second intermediate component (7) which is assigned to the second longitudinal member (3), is formed from the second steel, is formed separately from the crossmember (4), separately from the longitudinal members (2, 3) and separately from the first intermediate component (6), and is connected to second longitudinal member (3) and to the crossmember (4).

10. Body structure (1) according to one of the preceding claims,
**characterized in that**
a respective length region (8) of the respective longitudinal member (2, 3) is received in the steel structure (5).

11. Body structure (1) according to one of the preceding claims,
**characterized in that**
the longitudinal members (2, 3) are in the form of components formed separately from one another and connected to one another at least via the steel structure (5) and the crossmember (4).

12. Body structure (1) according to one of Claims 1 to 10,
**characterized in that**
the longitudinal members (2, 3) are formed integrally with one another and are thereby formed by a single piece, which also has at least one second crossmember.

13. Body structure (1) according to one of the preceding claims,
**characterized in that**
the body structure (1) is in the form of a rear-end structure for a rear of the body.

14. Body for a passenger motor vehicle, having a body structure (1) according to one of the preceding claims.

15. Passenger motor vehicle having a body according to Claim 14.

## Revendications

1. Structure de carrosserie (1) pour une carrosserie de voiture automobile de tourisme, comprenant deux poutres longitudinales (2, 3) qui sont espacées l'une de l'autre dans la direction transversale du véhicule (y), avec au moins une traverse (4) qui est formée à partir d'un premier acier, et avec une structure en acier (5) formée à partir d'un second acier, différent du premier acier,
**caractérisée en ce que**
les poutres longitudinales (2, 3) sont réalisées sous forme de pièces en métal léger coulé, la structure en acier (5) étant reliée aux poutres longitudinales respectives (2, 3) et à la traverse (4) de sorte que la poutre longitudinale respective (2, 3) est reliée par l'intermédiaire de la structure en acier (5) à la traverse (4).

2. Structure de carrosserie (1) selon la revendication 1,
**caractérisée en ce que**
la poutre longitudinale respective (2, 3) est réalisée sous la forme d'une pièce en métal léger coulé sous pression.

3. Structure de carrosserie (1) selon la revendication 1 ou 2,
**caractérisée en ce que**
la poutre longitudinale respective (2, 3) est réalisée sous la forme d'une pièce en aluminium coulé respective.

4. Structure de carrosserie (1) selon l'une quelconque des revendications précédentes,
**caractérisée en ce que**
la traverse (4) est réalisée sous la forme d'une pièce en tôle d'acier.

5. Structure de carrosserie (1) selon l'une quelconque des revendications précédentes,
**caractérisée en ce que**
la structure en acier (5) est formée à partir de tôle d'acier.

6. Structure de carrosserie (1) selon l'une quelconque des revendications précédentes,
**caractérisée en ce que**
le premier acier est un acier à haute résistance dont la résistance à la traction est supérieure à 700 MPa.

7. Structure de carrosserie (1) selon l'une quelconque des revendications précédentes,
**caractérisée en ce que**
le premier acier est un acier trempé à la presse.

8. Structure de carrosserie (1) selon l'une quelconque des revendications précédentes,
**caractérisée en ce que**
le second acier est un acier dont la résistance à la traction est inférieure à 500 MPa et supérieure à 300 MPa.

9. Structure de carrosserie (1) selon l'une quelconque des revendications précédentes,
**caractérisée en ce que**
la structure en acier (5) comporte :
- une première pièce intermédiaire (6), associée à une première des poutres longitudinales (2, 3) et formée à partir du second acier, qui est réalisée séparément de la traverse (4) et séparément des poutres longitudinales (2, 3), et qui est reliée à la première poutre longitudinale (2) et à la traverse (4), et
- une seconde pièce intermédiaire (7), associée à la seconde poutre longitudinale (3) et formée à partir du second acier, qui est réalisée séparément de la traverse (4), séparément des poutres longitudinales (2, 3) et séparément de la première pièce intermédiaire (6), et qui est reliée à la seconde poutre longitudinale (3) et à la traverse (4).

10. Structure de carrosserie (1) selon l'une quelconque des revendications précédentes,
**caractérisée en ce que**
une zone de longueur respective (8) de la poutre longitudinale respective (2, 3) est reçue dans la structure en acier (5).

11. Structure de carrosserie (1) selon l'une quelconque des revendications précédentes,
**caractérisée en ce que**
les poutres longitudinales (2, 3) sont réalisées séparément l'une de l'autre et sont au moins reliées par l'intermédiaire de la structure en acier (5) et de la traverse (4).

12. Structure de carrosserie (1) selon l'une quelconque des revendications 1 à 10,
**caractérisée en ce que**
les poutres longitudinales (2, 3) sont réalisées d'un seul tenant l'une avec l'autre et sont ainsi formées par une pièce unique qui comporte également au moins une seconde traverse.

13. Structure de carrosserie (1) selon l'une quelconque des revendications précédentes,
**caractérisée en ce que**
la structure de carrosserie (1) est réalisée sous la forme d'une structure arrière pour une partie arrière de la carrosserie.

14. Carrosserie pour une voiture automobile de tourisme, comprenant une structure de carrosserie (1) selon l'une quelconque des revendications précédentes.

15. Voiture automobile de tourisme, comprenant une carrosserie selon la revendication 14.
